# EUROPÄISCHE PATENTSCHRIFT

(11) **EP 4 045 876 B1**
(45) Veröffentlichungstag und Bekanntmachung des Hinweises auf die Patenterteilung: **25.12.2024**
(21) Anmeldenummer: 20786246.7
(22) Anmeldetag: 17.09.2020
(51) Int. Cl.: G01C 21/36, G01C 21/00, G06V 20/56, G06V 20/58

(54) **VERFAHREN ZUM DETEKTIEREN EINER VERKEHRSKARTENÄNDERUNG MIT CLASSIFIERN**
METHOD FOR DETECTING A TRAFFIC MAP CHANGE WITH CLASSIFIERS
PROCÉDÉ DE DÉTECTION D'UN CHANGEMENT SUR UNE CARTE DE TRAFIC À L'AIDE DE CLASSIFICATEURS

(30) Priorität: 17.09.2019 DE 102019214143
(43) Veröffentlichungstag der Anmeldung: 24.08.2022
(73) Patentinhaber: Continental Automotive GmbH, 30165 Hannover (DE)
(72) Erfinder: HAMER, Henning, 60488 Frankfurt am Main (DE)
(74) Vertreter: Reddie & Grose LLP
(86) Internationale Anmeldenummer: PCT/EP2020/075950
(87) Internationale Veröffentlichungsnummer: WO 2021/053060

(56) Entgegenhaltungen:
- WO-A1-2018/126215
- US-A1- 2019 147 331

## Beschreibung

Die Erfindung bezieht sich auf ein Verfahren und ein System zum Detektieren einer Verkehrskartenänderung mit Classifiern, ein Computerprogramm und ein computerlesbares Speichermedium.

HD Karten werden beim autonomen Fahren verwendet, um voraus zu planen. Beispielsweise werden Vermessungsfahrzeuge benutzt um die HD Karten zu generieren. Alternativ werden die HD Karten auch aus Luft- oder Satellitenbildern generiert.

Wenn sich das Straßennetz ändert, veralten die HD Karten schnell. Das ist ein Problem für autonomes Fahren, zum Beispiel, wenn ein Fahrzeug vier Fahrbahnen hinter einer Kurve erwartet aber lediglich drei Fahrbahnen vorhanden sind kann dies zu einer gefährlichen Situation führen.

US 2019/0147331 A1 offenbart Verfahren zur Aktualisierung von HD-Karten unter Verwendung von Data von verschiedenen, heterogenen Quellen. Anhand von Sensordaten autonomer Fahrzeuge werden Objekte in der Umgebung der Fahrzeuge identifiziert, die nicht in der jeweilig lokal gespeicherten HD-Karte vorhanden sind. Mit Hilfe der Sensordaten wird dann, in Zusammenarbeit mit einem Server, die HD-Karte aktualisiert.

WO 2018/126215 A1 offenbart ein Verfahren, bei dem Fahrzeuge Abweichungen zwischen einer HD-Karte und der mit Sensoren erfassten Umgebung der Fahrzeuge detektieren und entsprechende Nachrichten, die die Abweichungen beschreiben, an ein Online-System senden.

Somit ist es Aufgabe der vorliegenden Erfindung, ein verbessertes Verfahren zum Detektieren einer Kartenänderung bereitzustellen. Die Aufgabe wird durch den Gegenstand der unabhängigen Ansprüche gelöst. Weiter bevorzugte Ausführungsformen sind Gegenstand der abhängigen Patentansprüche.

Gemäß einem Aspekt umfasst ein Verfahren zum Detektieren einer Verkehrskartenänderung folgende Schritte. Bestimmen einer Fahrzeugposition eines Fahrzeugs innerhalb der Verkehrskarte durch das Fahrzeug. Bestimmen einer Fahrzeugansichtskarte abhängig von der bestimmten Fahrzeugposition und der Verkehrskarte, wobei die Fahrzeugansichtskarte eine Projektion eines Inhalts der Verkehrskarte in eine Perspektive eines Sensors des Fahrzeugs abhängig von der Fahrzeugposition umfasst. Bestimmen von Änderungsdaten durch Vergleichen von Sensordaten des Fahrzeugs und der Fahrzeugansichtskarte abhängig von mindestens einem trainierten Classifier. Der mindestens eine Classifier wird mit den Sensordaten und der Fahrzeugansichtskarte trainiert. Die Änderungsdaten werden ausgehend von der Fahrzeugposition detektiert. Die Änderungsdaten umfassen einen Änderungsindikator, der angibt, ob durch den Vergleich eine Änderung zu der Verkehrskarte detektiert wurde, und eine Änderungsposition, die angibt, wo die Änderung auf der Verkehrskarte detektiert wurde.

Der Begriff "Verkehrskartenänderung", wie er hier benutzt wird, umfasst eine Änderung eines Straßennetzes und/oder eines Objekts in der realen Welt im Vergleich zu der Darstellung des Straßennetzes und/oder des Objekts in einer Verkehrskarte.

Die Sensordaten werden von Sensoren des Fahrzeugs aufgenommen. Die Sensordaten umfassen insbesondere Kameradaten und/oder Lidardaten.

Durch den mit Sensordaten und der Fahrzeugansichtskarte trainierten Classifier können Verkehrskartenänderungen ohne manuelles Optimieren des Detektionsalgorithmus detektiert werden.

Die Fahrzeugansichtskarte ist abhängig von der Fahrzeugposition. Somit wird vorzugsweise der Classifier mit der Fahrzeugposition trainiert. Insbesondere werden künstliche Bilder mit einem künstlichen Versatz erzeugt, mit deren Hilfe der Classifier trainiert wird. Der künstliche Versatz, auch Offset genannt, gibt an, wie ein Objekt in dem Bild im Vergleich zu einer Verkehrskarte abhängig von der Fahrzeugposition versetzt ist.

Je besser der Classifier auf die Fahrzeugpositionen trainiert ist, desto genauer ist die Fahrzeugansichtskarte. Auf diese Weise kann die Robustheit des Verfahrens zum Detektieren der Verkehrskartenänderung verbessert werden.

Vorzugsweise werden durch den Classifier Fehler in der Bestimmung der Fahrzeugposition, beispielsweise durch GPS, ausgebessert, was die Robustheit des Verfahrens zum Detektieren der Verkehrskartenänderung verbessert.

Vorzugsweise werden die Änderungsdaten an ein Backend übertragen.

Auf diese Weise können die Änderungsdaten einer Vielzahl von Fahrzeugen zentral verarbeitet werden.

Somit wird ein verbessertes Verfahren zum Detektieren einer Verkehrskartenänderung bereitgestellt.

Nach einer bevorzugten Ausführungsform umfasst das Verfahren ein Bestimmen von Validierungsdaten durch Kommentieren des Änderungsindikators und der Änderungsposition von einem Kommentator und Anpassen der Machine-Learning-Einheit abhängig von den bestimmten Validierungsdaten.

Vorzugsweise ist der Kommentator ein menschlicher Kommentator.

Auf diese Weise ist ein manueller Eingriff lediglich beim Trainieren des Classifiers nötig.

Somit wird ein verbessertes Verfahren zum Detektieren einer Verkehrskartenänderung bereitgestellt.

Nach einer bevorzugten Ausführungsform bestimmt das Fahrzeug seine Fahrzeugposition in der Verkehrskarte abhängig von einem globalen Navigationssatellitensystem und/oder Landmarkenmatching.

Eine Genauigkeit der bestimmten Fahrzeugposition beeinflusst direkt eine Qualität der Fahrzeugansichtskarte.

Somit wird ein verbessertes Verfahren zum Detektieren einer Verkehrskartenänderung bereitgestellt.

Erfindungsgemäß umfasst die Fahrzeugansichtskarte eine Projektion.

Die Projektion umfasst eine Projektion eines Inhalts der Verkehrskarte in eine Perspektive eines Sensors des Fahrzeugs abhängig von der Fahrzeugposition in der Verkehrskarte. Zum Beispiel wird eine 3D-Abbildung, insbesondere 3D-Vektor-Abbildung, eines Verkehrsschilds, das in der Verkehrskarte abgebildet ist, in eine Perspektive einer Kamera des Fahrzeugs projiziert. In anderen Worten wird simuliert, wie das Verkehrsschild, das in einer 3D-Abbildung in der Verkehrskarte eingezeichnet ist, in 2D aussehen würde, wenn es aus der Perspektive der Kamera des Fahrzeugs aufgenommen worden wäre.

Auf diese Weise kann die simulierte 2D Ansicht des Verkehrsschilds mit der 2D-Ansicht des Verkehrsschilds, das von den Sensoren des Fahrzeugs bestimmt wird, verglichen werden.

Somit wird ein verbessertes Verfahren zum Detektieren einer Verkehrskartenänderung bereitgestellt.

Nach einer bevorzugten Ausführungsform werden abhängig von demselben Classifier die Fahrzeugposition in der Verkehrskarte und die Änderungsdaten bestimmt.

Somit wird ein verbessertes Verfahren zum Detektieren einer Verkehrskartenänderung bereitgestellt.

Nach einer bevorzugten Ausführungsform umfassen die Änderungsdaten eine Position des Fahrzeugs in der Verkehrskarte beim Detektieren der Verkehrskartenänderung, eine Projektion der Fahrzeugansichtskarte in Fahrzeugsensorkoordinaten, die Sensordaten und/oder Umgebungsdaten. Vorzugsweise werden die Änderungsdaten von einer Vielzahl von Fahrzeugen jeweils an das Backend übertragen. Weiter vorzugsweise weist jedes Fahrzeug der Vielzahl der Fahrzeuge eine Kopie der Verkehrskarte auf. Folglich wird die Verkehrskarte oder ein Objekt der Verkehrskarte abhängig von den Sensordaten und der bestimmten Änderungsposition der Vielzahl von Fahrzeugen angepasst. Vorzugsweise wird eine Änderungsposition die Verkehrskarte oder das Objekt der Verkehrskarte durch Mitteln der entsprechenden Änderungspositionen der Vielzahl von Fahrzeugen angepasst. Falls eine Projektion benutzt worden ist, wird eine Änderungsposition basierend auf der Fahrzeugposition und der Projektion durch benutzen eines Strahls bestimmt.

Somit wird ein verbessertes Verfahren zum Detektieren einer Verkehrskartenänderung bereitgestellt.

Nach einer bevorzugten Ausführungsform umfasst das Verfahren den Schritt Anpassen der Verkehrskarte abhängig von den Sensordaten und der bestimmten Änderungsposition.

Beispielsweise wird basierend auf einer Vielzahl von 2D-Abbildungen von der Vielzahl von Fahrzeugen, insbesondere aus Sensordaten der Fahrzeuge, und der jeweiligen Fahrzeugposition eine Multi-View-Wiederherstellung benutzt werden, um eine 3D-Abbildung des geänderten Objekts, also der Änderung selbst, zu bestimmen. Dies wird vorzugsweise durch eine 3D-Modeleinheit durchgeführt. Die 3D-Modeleinheit umfasst vorzugsweise zusätzliche Randbedingungen, die von der 3D-Modeleinheit beachtet werden, bevor die Multi-View-Wiederherstellung ausgeführt wird. Zum Beispiel werden die 2D-Abbildungen vorangeordnet, um eine Position der Sensoren, insbesondere Kameras, der Fahrzeuge in 3D, die 2D-Abbildungen und die Verkehrskarte, insbesondere 3D-Verkehrskarte, konsistent zu halten.

Somit wird ein verbessertes Verfahren zum Detektieren einer Verkehrskartenänderung bereitgestellt.

Gemäß einem weiteren Aspekt ist ein System eingerichtet, das Verfahren, wie es hier beschrieben ist, auszuführen.

Gemäß einem weiteren Aspekt ist ein Computerprogramm vorgesehen, das, wenn es auf einem Prozessor ausgeführt wird, den Prozessor anleitet, die Schritte des Verfahrens, wie es hier beschrieben ist, auszuführen.

Gemäß einem weiteren Aspekt ist ein computerlesbares Speichermedium vorgesehen, auf dem ein Computerprogramm, wie es hier beschrieben ist, gespeichert ist.

Die beiliegenden Zeichnungen sollen ein weiteres Verständnis der Ausführungsformen der Erfindung vermitteln. Die beiliegenden Zeichnungen veranschaulichen Ausführungsformen und dienen im Zusammenhang mit der Beschreibung der Erklärung von Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
Fig. 1: eine schematische Darstellung der Machine-Learning-Einheit;
Fig. 2: eine schematische Darstellung einer Anpassung eines Ausgangsmodels einer Verkehrskarte;
Fig. 3: eine schematische Darstellung des Trainings des Classifiers mit einer Fahrzeugposition;
Fig. 4: eine schematische Darstellung des Trainings des Classifiers mit einer Fahrzeugposition und einer Kartenänderung; und
Fig. 5: eine schematische Darstellung des Verfahrens zum Detektieren einer Verkehrskartenänderung.

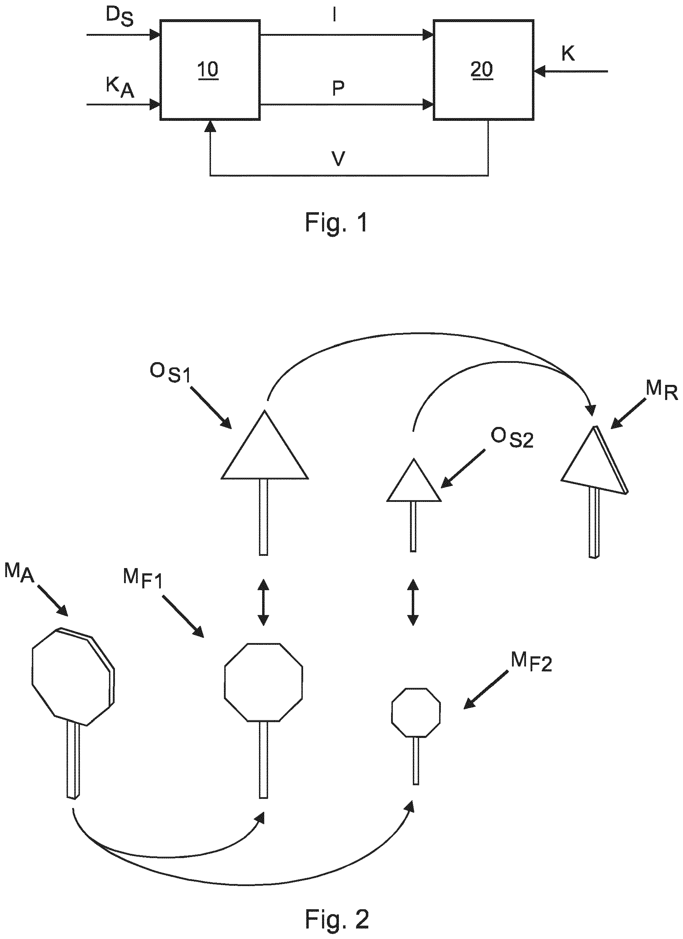

Fig. 1 zeigt eine schematische Darstellung der Machine-Learning-Einheit 10. Die Machine-Learning-Einheit 10 ist eingerichtet einen Classifier zu trainieren, mit dem ein Vergleichen von Sensordaten Ds eines Fahrzeugs mit einer Fahrzeugansichtskarte K_{A} möglich ist. Die Fahrzeugansichtskarte K_{A} stellt eine Verkehrskarte eines vorliegenden Verkehrsabschnitts aus einer fahrzeugzentrischen Ansicht, also aus Sicht des Fahrzeugs, dar.

Die Machine-Learning-Einheit 10 wird mit Sensordaten Ds des Fahrzeugs und der Fahrzeugansichtskarte K_{A} als Eingang trainiert. Die Machine-Learning-Einheit 10 vergleicht die Sensordaten Ds des Fahrzeugs mit der Fahrzeugansichtskarte K_{A}. Wenn ein Unterschied festgestellt wird, beispielsweise eine andere Anzahl von Fahrstreifen oder ein fehlendes oder verändertes Verkehrsschild, bestimmt die Machine-Learning-Einheit 10 einen Änderungsindikator I, der angibt, ob eine Änderung erkannt worden ist oder nicht, und falls eine Änderung erkannt worden ist eine Änderungsposition P, die angibt, wo sich die Änderung auf der Fahrzeugansichtskarte K_{A} befindet.

Die Änderungsposition P und der Änderungsindikator I werden an eine Validierungseinheit 20 gesendet. Hier kommentiert ein Kommentator K die Änderungsposition P und den Änderungsindikator I und bestimmt Validierungsdaten V. Die Validierungsdaten V geben an, wie genau der Änderungsindikator I und/oder die Änderungsposition P ist.

Basierend auf den Validierungsdaten V kann die Machine-Learning-Einheit 10 eine Parametrisierung der Machine-Learning-Einheit 10 derart anpassen, dass zukünftige Änderungsindikatoren I und Änderungspositionen P eine höhere Genauigkeit aufweisen.

Fig. 2 zeigt eine schematische Darstellung einer Anpassung eines Ausgangsmodels M_{A} einer Verkehrskarte. Das Ausgangsmodel M_{A} ist eine 3D-Darstellung eines Stoppschildes, das auf der Verkehrskarte an einer bestimmten Verkehrsstelle eingezeichnet ist. Von einem ersten Fahrzeug und einem zweiten Fahrzeug, die entlang der Verkehrsstelle fahren, werden jeweils Sensordaten Ds bestimmt, die ein erstes Sensorobjekt O_{S1} und ein zweites Sensorobjekt O_{S2} darstellen. Die Sensordaten Ds umfassen beispielsweise Kameradaten. Das erste Sensorobjekt O_{S1} ist ein Vorfahrt-gewähren-Schild in einer 2D-Ansicht. Das zweite Sensorobjekt O_{S2} ist ebenfalls ein Vorfahrt-gewähren-Schild in einer 2D-Ansicht. Das erste Sensorobjekt O_{S1} und das zweite Sensorobjekt O_{S2} sind von unterschiedlicher Größe, da das erste Fahrzeug und das zweite Fahrzeug die jeweiligen Sensorobjekte O_{S1,} O_{S2} von unterschiedlichen Fahrzeugpositionen aus aufgenommen haben.

Aus der Verkehrskarte wird nun jeweils eine Fahrzeugansichtskarte K_{A} generiert, abhängig von der jeweiligen Fahrzeugposition des ersten Fahrzeugs und des zweiten Fahrzeugs. In der jeweiligen Fahrzeugansichtskarte K_{A} wird das Ausgangsmodel M_{A} in eine Fahrzeugansicht übertragen. Auf diese Weise wird basierend auf der jeweiligen Fahrzeugposition das Ausgangsmodel M_{A} zu einem ersten fahrzeugzentrischen Model M_{F1} und einem zweiten fahrzeugzentrischen Model M_{F2} transformiert. Das erste fahrzeugzentrische Model M_{F1} ist somit eine 2D Ansicht des Ausgangsmodels M_{A}, wie es von dem ersten Fahrzeug gesehen würde, und das zweite fahrzeugzentrische Model M_{F2} ist somit eine 2D Ansicht des Ausgangsmodels M_{A}, wie es von dem zweiten Fahrzeug gesehen würde.

Basierend auf einem Classifier, der mit Sensordaten und Fahrzeugansichtskarten einer Vielzahl von Fahrzeugen trainiert wurde, wird folglich das erste Sensorobjekt O_{S1} mit dem ersten fahrzeugzentrischen Model M_{F1} verglichen und das zweite Sensorobjekt O_{S2} mit dem zweiten fahrzeugzentrischen Model M_{F2} verglichen.

Offensichtlich wurde das in der Verkehrskarte eingezeichnete Stoppschild durch ein Vorfahrt-gewähren-Schild ausgetauscht. Diese Änderung kann nun detektiert werden und eine Änderungsindikator I und eine Änderungsposition P bestimmt werden.

Basierend darauf wird die Verkehrskarte angepasst. Hierfür muss aus dem ersten Sensorobjekt O_{S1} und der Fahrzeugposition des ersten Fahrzeugs und dem zweiten Sensorobjekt O_{S2} und der Fahrzeugposition des zweiten Fahrzeugs ein rekonstruiertes Model MR rekonstruiert werden. In anderen Worten wird aus dem ersten Sensorobjekt O_{S1} und dem zweiten Sensorobjekt O_{S2} ein 3D-Modell bestimmt, das die jeweiligen Fahrzeugpositionen beachtet. Das rekonstruierte Model M_{R} stellt somit ein 3D-Model des neuen Vorfahrt-gewähren Schilds dar. Die Verkehrskarte kann somit basierend auf dem bestimmten rekonstruierten Model M_{R} an der bestimmen Änderungsposition P angepasst werden.

Auf diese Weise kann basierend auf dem trainierten Classifier eine Änderung eines Objekts im realen Leben im Vergleich zu dem Objekt in einer Verkehrskarte detektiert werden. Zudem kann die Verkehrskarte verbessert angepasst werden.

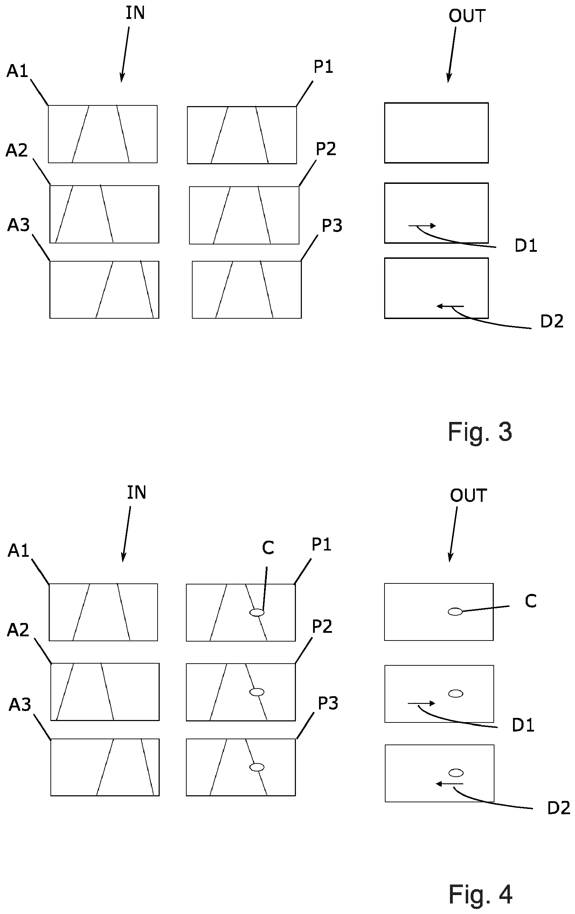

Fig. 3 zeigt eine schematische Darstellung des Trainings des Classifiers mit einer Fahrzeugposition. Als Eingang IN werden verschiedene Bilder, insbesondere aus künstlichen Daten, gewählt. In diesem Fall wird eine Straße aus einer ersten Ansicht A1, einer zweiten Ansicht A2 und einer dritten Ansicht A3 verwendet. Die Straße wird in der ersten Ansicht A1 von einem Fahrzeug gesehen, das zentral in der Verkehrskarte angeordnet ist. In der zweiten Ansicht A2 wird die Straße von einem Fahrzeug gesehen, das am rechten Rand der Verkehrskarte angeordnet ist.

Deshalb ist die Straße in der zweiten Ansicht A2 im Vergleich zu der Straße in der ersten Ansicht A1 nach links verschoben. Demgegenüber wird in der dritten Ansicht A3 die Straße von einem Fahrzeug gesehen, das am linken Rand der Verkehrskarte angeordnet ist. Deshalb ist die Straße in der dritten Ansicht A3 im Vergleich zu der Straße in der ersten Ansicht A1 nach rechts verschoben.

Die erste Ansicht A1 wird in eine erste Projektion P1 projiziert, die zweite Ansicht A2 wird in eine zweite Projektion P2 projiziert und die dritte Ansicht A3 wird in eine dritte Projektion P3 projiziert. Jede der Projektionen projiziert die jeweilige Ansicht in eine zentrale Ansicht. Als Ausgang OUT wird anschließend ein Versatz ausgegeben, der angibt, wie weit die Straße im Zuge der Projektion verschoben wurde.

Folglich ergibt sich zu der ersten Projektion P1 ein leerer Ausgang, da kein Versatz beim Projizieren angefallen ist. Zu der zweiten Projektion P2 ergibt sich ein erster Versatz D1 in Form eines Vektors, der angibt, dass im Zuge der Projektion die Straße nach rechts um den ersten Versatz D1 verschoben wurde. Zu der dritten Projektion P3 ergibt sich ein zweiter Versatz D2 in Form eines Vektors, der angibt, dass im Zuge der Projektion die Straße nach links um den zweiten Versatz D2 verschoben wurde.

Fig. 4 zeigt eine schematische Darstellung des Trainings des Classifiers mit einer Fahrzeugposition wie in Fig. 3 gezeigt. Im Unterschied zu Fig. 3 weisen die jeweiligen Projektionen P1, P2, P3 zusätzlich eine Änderung C auf. In diesem Fall handelt es sich bei der Änderung C um ein Verkehrsschild am Rand der Straße. Dementsprechend umfasst der Ausgang OUT ebenfalls die jeweilige Änderung C, die detektiert wird und deren Position für die Projektion angepasst wird.

Der Classifier wird somit mit der Fahrzeugposition und den Sensordaten derart trainiert, dass eine Verkehrskartenänderung verbessert detektiert werden kann.

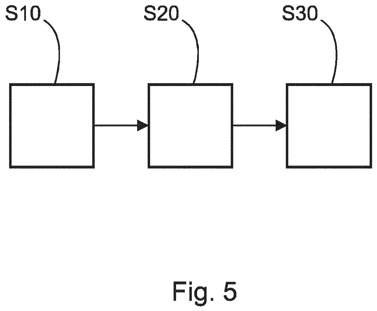

Fig. 5 zeigt ein Verfahren zum Detektieren einer Verkehrskartenänderung, umfassend folgende Schritte. In einem ersten Schritt S10 wird eine Fahrzeugposition eines Fahrzeugs innerhalb der Verkehrskarte durch das Fahrzeug bestimmt. In einem zweiten Schritt S20 wird eine Fahrzeugansichtskarte K_{A} abhängig von der bestimmten Fahrzeugposition und der Verkehrskarte bestimmt, wobei die Fahrzeugansichtskarte K_{A} eine fahrzeugzentrische Ansicht der Verkehrskarte umfasst. In einem dritten Schritt S30 werden Änderungsdaten durch Vergleichen von Sensordaten Ds des Fahrzeugs und der Fahrzeugansichtskarte K_{A} abhängig von mindestens einem trainierten Classifier durch eine Machine-Learning-Einheit 10 bestimmt, wobei der mindestens eine Classifier mit den Sensordaten Ds und der Fahrzeugansichtskarte K_{A} trainiert wird und wobei die Änderungsdaten einen Änderungsindikator I umfassen, der angibt, ob durch den Vergleich eine Änderung zu der Verkehrskarte detektiert wurde, und eine Änderungsposition P umfassen, die angibt, wo die Änderung auf der Verkehrskarte detektiert wurde.

## Patentansprüche

1. Verfahren zum Detektieren einer Verkehrskartenänderung, umfassend die Schritte:
Bestimmen (S10) einer Fahrzeugposition eines Fahrzeugs innerhalb der Verkehrskarte durch das Fahrzeug;
Bestimmen (S20) einer Fahrzeugansichtskarte (K_{A}) abhängig von der bestimmten Fahrzeugposition und der Verkehrskarte, wobei die Fahrzeugansichtskarte (K_{A}) eine Projektion eines Inhalts der Verkehrskarte in eine Perspektive eines Sensors des Fahrzeugs abhängig von der Fahrzeugposition umfasst;
Bestimmen (S30) von Änderungsdaten durch Vergleichen von Sensordaten (Ds) des Fahrzeugs und der Fahrzeugansichtskarte (K_{A}) abhängig von mindestens einem trainierten Classifier durch eine Machine-Learning-Einheit (10);
wobei der mindestens eine Classifier mit den Sensordaten (Ds) und der Fahrzeugansichtskarte (K_{A}) trainiert wird;
wobei die Änderungsdaten ausgehend von der Fahrzeugposition detektiert werden; und
wobei die Änderungsdaten einen Änderungsindikator (I) umfassen, der angibt, ob durch den Vergleich eine Änderung zu der Verkehrskarte detektiert wurde, und eine Änderungsposition (P) umfassen, die angibt, wo die Änderung auf der Verkehrskarte detektiert wurde.

2. Verfahren nach Anspruch 1, umfassend:
Bestimmen von Validierungsdaten (V) durch Kommentieren des Änderungsindikators (I) und der Änderungsposition (P) von einem Kommentator (K); und
Anpassen der Machine-Learning-Einheit (10) abhängig von den bestimmten Validierungsdaten (V).

3. Verfahren nach einem der voranstehenden Ansprüche, wobei
das Fahrzeug die Fahrzeugposition in der Verkehrskarte abhängig von einem globalen Navigationssatellitensystem und/oder Landmarkenmatching bestimmt.

4. Verfahren nach einem der voranstehenden Ansprüche, wobei
abhängig von demselben Classifier Fehler in der Bestimmung der Fahrzeugposition in der Verkehrskarte ausgebessert und die Änderungsdaten bestimmt werden.

5. Verfahren nach einem der voranstehenden Ansprüche, wobei
die Änderungsdaten eine Position des Fahrzeugs in der Verkehrskarte beim Detektieren der Verkehrskartenänderung, eine Projektion der Fahrzeugansichtskarte (K_{A}) in Fahrzeugsensorkoordinaten, die Sensordaten (Ds) und/oder Umgebungsdaten umfassen.

6. Verfahren nach einem der voranstehenden Ansprüche, umfassend:
Anpassen der Verkehrskarte abhängig von den Sensordaten (Ds) und der bestimmten Änderungsposition (P).

7. System, das eingerichtet ist, das Verfahren nach einem der Ansprüche 1 bis 6 auszuführen.

8. Computerprogramm, das, wenn es auf einem Prozessor ausgeführt wird, den Prozessor anleitet, die Schritte des Verfahrens nach einem der Ansprüche 1 bis 6 auszuführen.

9. Computerlesbares Speichermedium, auf dem ein Computerprogramm nach Anspruch 8 gespeichert ist.

## Claims

1. Method for detecting a traffic map change, comprising the steps:
determining (S10) a vehicle position of a vehicle within the traffic map by the vehicle;
determining (S20) a vehicle view map (K_{A}) depending on the determined vehicle position and the traffic map, wherein the vehicle view map (K_{A}) comprises a projection of a content of the traffic map into a perspective of a sensor of the vehicle depending on the vehicle position;
determining (S30) change data by comparing sensor data (D_{S}) of the vehicle and the vehicle view map (K_{A}) depending on at least one trained classifier by a machine learning unit (10);
wherein the at least one classifier is trained with the sensor data (D_{S}) and the vehicle view map (K_{A});
wherein the change data is detected, based on the vehicle position; and
wherein the change data comprise a change indicator (I) that indicates whether a change to the traffic map was detected by the comparison, and a change position (P) that indicates where the change was detected on the traffic map.

2. The method according to claim 1, comprising:
determining validation data (V) by annotating the change indicator (I) and the change position (P) by an annotator (K); and
adapting the machine learning unit (10), depending on the determined validation data (V).

3. Method according to any one of the preceding claims, wherein
the vehicle determines the vehicle position in the traffic map, depending on a global navigation satellite system and/or landmark matching.

4. Method according to any one of the preceding claims, wherein
depending on the same classifier, errors in the determination of the vehicle position in the traffic map are corrected and the change data are determined.

5. Method according to any one of the preceding claims, wherein
the change data comprise a position of the vehicle in the traffic map when detecting the traffic map change, a projection of the vehicle view map (K_{A}) in vehicle sensor coordinates, the sensor data (D_{S}) and/or environmental data.

6. Method according to any one of the preceding claims, comprising:
adapting the traffic map depending on the sensor data (Ds) and the determined change position (P).

7. System, configured to carry out the method according to any one of claims 1 to 6.

8. Computer program which, when executed on a processor, instructs the processor to carry out the steps of the method according to any one of claims 1 to 6.

9. Computer-readable storage medium, on which a computer program according to claim 8 is stored.

## Revendications

1. Procédé de détection d'un changement sur une carte de trafic, comprenant les étapes suivantes :
la détermination (S10) d'une position de véhicule d'un véhicule dans la carte de trafic par le véhicule ;
la détermination (S20) d'une carte de point de vue de véhicule (K_{A}) en fonction de la position de véhicule déterminée et de la carte de trafic, dans lequel la carte de point de vue de véhicule (K_{A}) comprend une projection d'un contenu de la carte de trafic dans une perspective d'un capteur du véhicule en fonction de la position de véhicule ;
la détermination (S30) de données de modification par comparaison de données de capteur (Ds) du véhicule et de la carte de point de vue de véhicule (K_{A}) en fonction d'au moins un classificateur entraîné par une unité d'apprentissage automatique (10) ;
dans lequel l'au moins un classificateur est entraîné avec les données de capteur (Ds) et la carte de point de vue de véhicule (K_{A}) ;
dans lequel les données de modification sont détectées à partir de la position de véhicule ; et
dans lequel les données de modification comprennent un indicateur de modification (I) qui indique si une modification a été détectée sur la carte de trafic par comparaison, et comprennent une position de modification (P) qui indique où la modification a été détectée sur la carte de trafic.

2. Procédé selon la revendication 1, comprenant :
la détermination de données de validation (V) par annotation de l'indicateur de modification (I) et de la position de modification (P) par un annotateur (K) ; et
adaptation de l'unité d'apprentissage automatique (10) en fonction des données de validation (V) déterminées.

3. Procédé selon l'une quelconque des revendications précédentes, dans lequel
le véhicule détermine la position de véhicule dans la carte de trafic en fonction d'un système mondial de navigation par satellite et/ou de correspondance par points de repère.

4. Procédé selon l'une quelconque des revendications précédentes, dans lequel
en fonction du même classificateur, des erreurs dans la détermination de la position de véhicule dans la carte de trafic sont corrigées et les données de modification sont déterminées.

5. Procédé selon l'une quelconque des revendications précédentes, dans lequel
les données de modification comprennent une position du véhicule dans la carte de trafic par détection de la modification de carte de trafic, une projection de la carte de point de vue de véhicule (K_{A}) en coordonnées de capteur de véhicule, les données de capteur (Ds) et/ou des données d'environnement.

6. Procédé selon l'une quelconque des revendications précédentes, comprenant :
l'adaptation de la carte de trafic en fonction des données de capteur (Ds) et de la position de modification (P) déterminée.

7. Système conçu pour mettre en oeuvre le procédé selon l'une quelconque des revendications 1 à 6.

8. Programme informatique, qui, lorsqu'il est réalisé sur un processeur, ordonne au processeur de mettre en oeuvre les étapes du procédé selon l'une quelconque des revendications 1 à 6.

9. Système de stockage lisible par ordinateur, sur lequel un programme informatique selon la revendication 8 est stocké.
